# EUROPÄISCHE PATENTANMELDUNG

(11) **EP 2 384 934 A1**
(43) Veröffentlichungstag der Anmeldung: **09.11.2011**
(21) Anmeldenummer: 10004833.9
(22) Anmeldetag: 07.05.2010
(51) Int. Cl.: B60Q 1/26, F21S 8/10

(54) **Leuchtmittel zur Erfüllung mehrerer Lichtfunktionen einer Kraftfahrzeugleuchte**

(71) Anmelder: odelo GmbH, 71409 Schwaikheim (DE)
(72) Erfinder: Vlastnik, Andreas, 71640 Ludwigsburg (DE); Rommel, Bernd, 70736 Fellbach (DE); Holzmacher, Günther, 71679 Asperg (DE); Keicher, Lukas, 70812 Stuttgart (DE)
(74) Vertreter: Benninger, Johannes

(57) **Zusammenfassung**

Es wird ein Leuchtmittel (01) für eine Kraftfahrzeugleuchte mit mindestens einem Lichtleiter (02) beschrieben, der wenigstens eine Lichteinkoppelfläche (03) und zumindest eine von der Lichteinkoppelfläche (03) verschiedene, auf einer Vorderseite (04) des Lichtleiters (02) angeordnete Lichtauskoppelfläche (05) aufweist. Das Leuchtmittel umfasst wenigstens einer der wenigstens einen Lichteinkoppelfläche (03) zugeordnete erste Lichtquelle (06). Die wenigstens eine erste Lichtquelle (06) ist zusammen mit dem mindestens einen Lichtleiter (02) zur Erfüllung einer ersten Lichtfunktion vorgesehen. Das Leuchtmittel umfasst außerdem zumindest eine zweite Lichtquelle (07) zur Erfüllung einer zweiten Lichtfunktion. Der mindestens eine Lichtleiter (02) weist hierzu eine Rückseite (08) auf, auf der wenigstens eine totalreflektierende Sammeloptik (09) angeordnet ist. Zusätzlich ist auf der Vorderseite (04) des mindestens einen Lichtleiters (02) wenigstens eine Streuoptik (10) vorgesehen. Mit den Optiken (09, 10) wird Licht der für die zweite Lichtfunktion vorgesehenen zweiten Lichtquelle (07) zunächst in den Lichtleiter (02) auf dessen Rückseite (08) ein- und anschließend auf dessen Vorderseite (04) wieder ausgekoppelt.

Darüber hinaus wird eine Kraftfahrzeugleuchte mit einem solchen Leuchtmittel (01) zur Erfüllung mehrerer Lichtfunktionen beschrieben.

## Beschreibung

Die Erfindung betrifft ein Leuchtmittel gemäß dem Oberbegriff des Anspruchs 1.

Eine Kraftfahrzeugleuchte erfüllt je nach Ausgestaltung eine oder mehrere Aufgaben bzw. Lichtfunktionen, wie beispielsweise bei einer Ausgestaltung als Scheinwerfer eine die Fahrbahn ausleuchtende Funktion, oder bei einer Ausgestaltung als Signalleuchte eine Signalfunktion, wie beispielsweise zur Fahrtrichtungsanzeige oder Anzeige einer Bremstätigkeit, oder einer Sicherstellung einer Sichtbarkeit des Kraftfahrzeugs bei Tag und/oder Nacht, wie etwa bei einer Ausgestaltung als Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine Kraftfahrzeugleuchte besteht im Wesentlichen aus einem Gehäuse, mindestens einem zur Erfüllung wenigstens einer Lichtfunktion in dem Gehäuse angeordneten Leuchtmittel, gegebenenfalls einem typischerweise hinter dem mindestens einen Leuchtmittel in dem Gehäuse angeordneten Reflektor, wie etwa einem Rinnenkonzentrator, z.B. einer Parabolrinne (CPC; Compound Parabolic Concentrator) oder dergleichen, und/oder einem vor dem mindestens einen Leuchtmittel angeordneten Optikelement, wie etwa einer Linse, zur Ausformung einer definierten Abstrahlcharakteristik, sowie einer das mindestens eine Leuchtmittel und gegebenenfalls den Reflektor bzw. das Optikelement gegen Witterungseinflüsse schützenden, kurz auch als Lichtscheibe bezeichneten transparenten Abdeckung. Die Lichtscheibe umschließt gemeinsam mit dem Gehäuse einen das Leuchtmittel und gegebenenfalls den Reflektor und/oder das Optikelement aufnehmenden Leuchteninnenraum. In dem Leuchteninnenraum kann zwischen Leuchtmittel und Lichtscheibe eine Optikscheibe angeordnet sein, welche beispielsweise eine bestimmte Struktur und/oder Maskierung aufweisen kann, beispielsweise um bei einer klaren, für einen Betrachter eine Tiefenwirkung bewirkenden Lichtscheibe das Leuchtmittel zu kaschieren. Das Gehäuse bzw. der Leuchteninnenraum kann dabei in mehrere Kammern mit jeweils eigenen Leuchtmitteln, eventuell Reflektoren und/oder Optikscheiben, sowie gegebenenfalls Lichtscheiben unterteilt sein, von denen mehrere Kammern eine oder mehrere gleiche oder jede Kammer eine andere der oben beschriebenen Lichtfunktionen erfüllen kann.

Ein Leuchtmittel für wenigstens eine Lichtfunktion umfasst wenigstens mindestens eine Lichtquelle, beispielsweise mindestens eine Glühlampe oder mindestens eine Gasentladungslampe oder mindestens eine Leuchtdiode sowie gegebenenfalls Kombinationen hiervon. Zusätzlich kann das Leuchtmittel einen Lichtleiter umfassen, in den Licht mindestens einer Lichtquelle an mindestens einer Lichteinkoppelfläche ein- und an mindestens einer von der Lichteinkoppelfläche verschiedenen Lichtauskoppelfläche wieder ausgekoppelt wird.

Kommen einzeln oder gruppenweise angeordnete Leuchtdioden jeweils bestehend aus mindestens einem Lichtemittierende-Diode-Chip (LED-Chip) als Lichtquelle zum Einsatz, so kann der Lichtleiter unmittelbar an eine den mindestens einen LED-Chip umgebenden, zumindest in einer Abstrahlrichtung transparenten Umhüllung angespritzt sein, oder diese Umhüllung selbst bilden.

Der Lichtleiter kann als stabförmiger oder flächiger, so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche.

Durch DE 102 00 359 B4 ist eine Kraftfahrzeugleuchte bekannt, die einen Flächenlichtleiter aufweist, in welchen Licht von einer dem Flächenlichtleiter zugeordneten ersten Lichtquelle quer zur Hauptabstrahlrichtung der Kraftfahrzeugleuchte eingekoppelt wird. Eine zweite Lichtquelle ist in Hauptabstrahlrichtung der Kraftfahrzeugleuchte gesehen vor einem Reflektor und hinter dem Flächenlichtleiter angeordnet. Die zweite Lichtquelle wird von dem Flächenlichtleiter in Hauptabstrahlrichtung gesehen ganz oder teilweise abgedeckt, wobei der Flächenlichtleiter für das von der zweiten Lichtquelle ausgestrahlte und von dem Reflektor gebündelte Licht durchlässig ist. Der Flächenlichtleiter koppelt zumindest einen Teil des von der ersten Lichtquelle in ihn eingekoppelten Lichts in einer Richtung aus, die von der mit der Hauptabstrahlrichtung der Kraftfahrzeugleuchte übereinstimmenden Lichtabstrahlrichtung der zweiten Lichtquelle verschieden ist. Das derart aus dem Flächenlichtleiter ausgekoppelte Licht fällt auf einen einer dritten Lichtquelle zugeordneten Reflektor, welcher dieses Licht in Hauptabstrahlrichtung an dem Flächenlichtleiter vorbei reflektiert.

Nachteilig hieran sind neben einem inhomogenen Erscheinungsbild wegen des durch den Flächenlichtleiter hindurchtretenden Lichts der zweiten Lichtquelle und des am Flächenlichtleiter vorbei gelenkten Lichts der dritten Lichtquelle sowie dem am Flächenlichtleiter vorbei reflektierten, aus dem Flächenlichtleiter ausgekoppelten Lichts der große benötigte Bauraum für die der zweiten und dritten Lichtquelle zugeordneten Reflektoren sowie für das am Flächenlichtleiter vorbei zu führende Licht, verbunden mit einer eingeschränkten Verwendbarkeit der Kraftfahrzeugleuchte zuzüglich der damit einhergehenden Einschränkungen bei der Gestaltungsfreiheit.

Durch DE 10 2005 035 066 A1 ist eine Kraftfahrzeugleuchte bekannt, welche zur Erzeugung einer ersten Lichtfunktion über ein eine erste Abstrahlfläche umfassendes erstes Leuchtmittel bestehend aus wenigstens einer ersten Lichtquelle und zumindest einem derselben zugeordneten Reflektor verfügt, und zur Erzeugung einer zweiten Lichtfunktion über ein zweites Leuchtmittel bestehend aus mindestens einer zweiten Lichtquelle und einem derselben zugeordneten Flächenlichtleiter verfügt. Der Flächenlichtleiter weist an einer Schmalseite eine Lichteinkoppelfläche auf. Ferner hat der Flächenlichtleiter streuende und/oder reflektierende Auskoppelelemente. Darüber hinaus hat der Flächenlichtleiter eine Lichtauskoppelfläche an einer dem ersten Leuchtmittel abgewandten Vorderseite. Der Flächenlichtleiter ist quer zur optischen Achse des ersten Leuchtmittels angeordnet, wobei sich ein äußerer Flächenabschnitt des Flächenlichtleiters an einem Umfangsrand des ersten Leuchtmittels quer zu dessen optischer Achse erstreckt. Das zweite Leuchtmittel umfasst eine die erste Abstrahlfläche umfassende zweite Abstrahlfläche in der Größe der Vorderseite des Flächenlichtleiters. Vor dem ersten Leuchtmittel befindet sich ein mit der ersten Abstrahlfläche des ersten Leuchtmittels übereinstimmender innerer Flächenabschnitt des Flächenlichtleiters. Die Auskoppelelemente sind derart in dem inneren Flächenabschnitt verteilt angeordnet, dass ein Aussparungsbereich des inneren Flächenabschnitts, der frei von Auskoppelelementen ist, einem Teilbereich der ersten Abstrahlfläche des ersten Leuchtmittels zugeordnet ist, dem ein hoher lichttechnischer Wirkungsgrad des ersten Leuchtmittels zugeordnet ist. Der verbleibende Teil des inneren Flächenabschnitts bildet einen Auskoppelbereich, in dem die Auskoppelelemente angeordnet sind. Der Auskoppelbereich ist einem Teilbereich der ersten Abstrahlfläche des ersten Leuchtmittels zugeordnet, dem ein niedriger lichttechnischer Wirkungsgrad des ersten Leuchtmittels zukommt.

Nachteilig hieran sind die unterschiedlichen lichttechnischen Wirkungsgrade innerhalb des inneren Flächenabschnitts des Flächenlichtleiters, verbunden mit einem inhomogenen Gesamteindruck der Kraftfahrzeugleuchte in Betrieb.

Durch DE 103 14 350 A1 ist eine Kraftfahrzeugleuchte mit einem Lichtleiter und wenigstens einer quer zu einer Hauptabstrahlrichtung der Kraftfahrzeugleuchte in den Lichtleiter Licht einkoppelnden Lichtquelle bekannt. Der Flächenlichtleiter und die diesem zugeordnete Lichtquelle dienen der Erfüllung einer Lichtfunktion der Kraftfahrzeugleuchte. Für eine zusätzliche Lichtfunktion ist ein Reflektor vorgesehen, mittels dem von einer weiteren Lichtquelle ausgestrahltes Licht am Lichtleiter vorbei in Hauptabstrahlrichtung umgelenkt wird.

Nachteilig hieran sind der zusätzliche Bauraumbedarf für den Reflektor und den Umstand, dass Licht an dem Lichtleiter vorbei geleitet werden muss, sowie das damit einhergehende inhomogene Erscheinungsbild für den Betrachter bei eingeschalteter Kraftfahrzeugleuchte.

Durch DE 10 2005 035 065 A1 ist eine Kraftfahrzeugleuchte bekannt, bei der ein Lichtleiter im Bereich einer zusätzlichen Lichtfunktion durchbrochen ist, so dass das von einem für die zusätzliche Lichtfunktion vorgesehenen Leuchtmittel abgestrahlte Licht ohne Abschwächung ungehindert austreten kann.

Nachteilig ist das wegen des Durchbruchs inhomogene Erscheinungsbild, sowohl bei ein-, als auch bei ausgeschalteter Kraftfahrzeugleuchte.

Eine Aufgabe der Erfindung ist es, ein Leuchtmittel zu entwickeln, welches mehrere Lichtfunktionen einer Kraftfahrzeugleuchte erfüllt und welches Leuchtmittel ein homogenes Erscheinungsbild der Kraftfahrzeugleuchte sowohl im ein-, als auch im ausgeschalteten Zustand sicherstellt. Darüber hinaus ist es eine Aufgabe der Erfindung eine Kraftfahrzeugleuchte mit einem homogenen Erscheinungsbild sowohl im ein- als auch im ausgeschalteten Zustand zu entwickeln.

Die Aufgabe wird gelöst durch ein Leuchtmittel mit den Merkmalen des Anspruchs 1 bzw. durch eine Kraftfahrzeugleuchte mit den Merkmalen des Anspruchs 10.

Ein erster Gegenstand der Erfindung betrifft demnach ein Leuchtmittel für eine Kraftfahrzeugleuchte mit mindestens einem Lichtleiter und wenigstens einer dem mindestens einen Lichtleiter zugeordneten ersten Lichtquelle. Die wenigstens eine erste Lichtquelle ist zusammen mit dem mindestens einen Lichtleiter zur Erfüllung einer ersten, eine Grundfunktion der Kraftfahrzeugleuchte bildenden Lichtfunktion vorgesehen. Der mindestens eine Lichtleiter hat zumindest eine der wenigstens einen ersten Lichtquelle zugeordnete Lichteinkoppelfläche und zumindest eine von der Lichteinkoppelfläche verschiedene, auf einer Vorderseite des Lichtleiters vorgesehene Lichtauskoppelfläche.

Das Leuchtmittel umfasst zumindest eine zweite Lichtquelle zur Erfüllung mindestens einer zweiten, eine Zusatzfunktion der Kraftfahrzeugleuchte bildenden Lichtfunktion. Der mindestens eine Lichtleiter hat eine vorzugsweise der Vorderseite beispielsweise gegenüberliegende Rückseite. Auf der Rückseite des für die Grundfunktion vorgesehenen Lichtleiters ist zur Erfüllung der Zusatzfunktion in Verbindung mit der zweiten Lichtquelle wenigstens eine totalreflektierende Sammeloptik angeordnet. Auf der Vorderseite ist wenigstens eine Streuoptik vorgesehen. Mit den Optiken wird Licht der mindestens einen für die zweite Lichtfunktion vorgesehenen zweiten Lichtquelle zunächst in den Lichtleiter auf dessen Rückseite ein- und anschließend auf dessen Vorderseite wieder ausgekoppelt.

Es ist ersichtlich, dass die Erfindung in jedem Fall verwirklicht ist, indem auf der Rückseite eines für eine beispielsweise eine Grundfunktion einer Kraftfahrzeugleuchte bildende erste Lichtfunktion vorgesehenen, einer ersten Lichtquelle zugeordneten Lichtleiters, beispielsweise einem Flächenlichtleiter oder einem oder mehreren, beispielsweise durch eine Schwimmhaut miteinander verbundenen stabförmigen Lichtleitern, eine totalreflektierende Sammeloptik zugeordnet ist, und auf der Vorderseite eine Streuoptik vorgesehen ist. Sammeloptik und Streuoptik dienen dazu, Licht mindestens einer für wenigstens eine beispielsweise eine Zusatzfunktion der Kraftfahrzeugleuchte bildende zweite Lichtfunktion vorgesehenen zweiten Lichtquelle zunächst in den Lichtleiter auf dessen Rückseite ein- und anschließend auf dessen Vorderseite wieder auszukoppeln.

Sich hierdurch ergebende Vorteile gegenüber dem Stand der Technik sind unter anderem, dass das Leuchtmittel eine Erfüllung mehrerer Lichtfunktionen erlaubt und dadurch gleichzeitig ein homogenes Erscheinungsbild sowohl im ein-, als auch im ausgeschalteten Zustand aufweist. Ein solches Leuchtmittel stellt ein ebenso homogenes Erscheinungsbild einer mit einem solchen Leuchtmittel ausgestatteten Kraftfahrzeugleuchte sicher.

Die Erfindung erlaubt eine Kraftfahrzeugleuchte mit mehreren Lichtfunktionen herzustellen, bei der eine eine Grundfunktion bildende erste Lichtfunktion durch ein Leuchtmittel umfassend eine erste Lichtquelle und einen Lichtleiter verwirklicht wird, und für eine eine Zusatzfunktion bildende zweite Lichtfunktion eine weitere, zweite Lichtquelle vorgesehen ist. Die zweite Lichtquelle bildet gemeinsam mit dem der ersten Lichtquelle zugeordneten Lichtleiter ein Leuchtmittel für die zweite Lichtfunktion. Der Lichtleiter ist dabei so gestaltet, dass er ein Zusammenwirken sowohl mit der ersten, als auch mit der zweiten Lichtquelle ermöglicht, ebenso wie ein Zusammenwirken nur mit der ersten, oder nur mit der zweiten Lichtquelle. Durch den zumindest mit wenigstens einer ersten und mindestens einer zweiten Lichtquelle zusammenwirkenden Lichtleiter, der sowohl in der Lage ist, mit der ersten, als auch mit der zweiten Lichtquelle sowohl gleichzeitig, als auch zeitversetzt bzw. einzeln zusammenzuwirken, entsteht ein Leuchtmittel, welches in der Lage ist, mehrere - im Ausführungsbeispiel zwei - Lichtfunktionen einer Kraftfahrzeugleuchte zu erfüllen. Sind mehr als zwei Lichtfunktionen zu erfüllen, so kann nach der Lehre der Erfindung mindestens eine weitere, dritte, vierte, etc. Lichtquelle vorgesehen sein, für welche dann jeweils eigene Optiken auf der Vorder- und Rückseite des Lichtleiters vorgesehen sein können. Ebenfalls ist denkbar, die bereits für die zweite Lichtquelle vorgesehenen Optiken auch zur Ein- und/oder Auskopplung von Licht einer dritten, vierten, etc. Lichtquelle zu verwenden.

Wichtig ist hervorzuheben, dass wenn mehr als zwei Lichtfunktionen zu erfüllen sind, diese auch durch kombiniertes Einschalten mehrerer Lichtquellen erfüllt werden können. So ist beispielsweise denkbar, zumindest eine für eine Wiederholblinkfunktion vorgesehene, gelbes Licht emittierende Lichtquelle mit einer beispielsweise für eine Bremslicht und/oder Rücklichtfunktion vorgesehene, rotes Licht emittierende Lichtquelle sowie gegebenenfalls eine weitere Lichtquelle zu kombinieren, etwa für eine Rückfahrlichtfunktion. Durch eine solche Kombination ist es möglich, mehr Lichtfunktionen zu erfüllen, als eigenständige Lichtquellen vorgesehen sind.

Als Lichtquellen kommen bevorzugt Leuchtdioden oder LED-Chips zum Einsatz. Diese erlauben einen besonders kompakten Aufbau des Leuchtmittels. Für einen nochmals kompakteren Aufbau kann darüber hinaus wenigstens die zumindest eine erste Lichtquelle ein LED-Chip oder eine Leuchtdiode sein, welche direkt vom Lichtleiter umspritzt ist. In diesem Fall liegt die Lichteinkoppelfläche für das von der ersten Lichtquelle ausgestrahlte Licht im Inneren des Lichtleiters unmittelbar der Lichtquelle gegenüber. Dies hat neben dem genannten Effekt eines besonders kompakten Aufbaus zudem eine hohe Effektivität des optischen Systems bestehend zumindest aus erster Lichtquelle, dieser zugeordneten Lichteinkoppelfläche, Lichtleiter und Lichtauskoppelfläche für das zumindest von der ersten Lichtquelle eingekoppelte Licht zur Folge.

Zur nochmals verbesserten Konzentration des von der zweiten Lichtquelle oder von einer weiteren, für eine zusätzliche Lichtfunktion vorgesehenen Lichtquelle auf die auf der Rückseite des Lichtleiters angeordnete Sammeloptik kann mindestens ein wenigstens dem zumindest einen zweiten Leuchtmittel zugeordneter Reflektor vorgesehen sein. Der Reflektor konzentriert das beispielsweise von dem zweiten Leuchtmittel ausgestrahlte Licht auf die an der Rückseite des Lichtleiters angeordnete Sammeloptik.

Der Reflektor kann an der Rückseite des Lichtleiters anliegen. Ebenfalls ist denkbar, dass der Reflektor mit Abstand zum Lichtleiter angeordnet ist.

Der Lichtleiter kann als stabförmiger oder flächiger, so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche. Im Falle mehrerer stabförmiger Lichtleiter können diese mit so genannten Schwimmhäuten - einer flächigen Verbindung zwischen den die einzelnen Lichtleiter bildenden Stäben, welche durch im Vergleich zu den Stäben eine nur geringe Dicke aufweist, untereinander verbunden sein.

Zur Lichtauskopplung können an einer der Lichtauskoppelfläche gegenüberliegenden Rückseite und/oder an der die Lichtauskoppelseite umfassenden Vorderseite streuende und/oder reflektierende Auskoppelelemente vorgesehen sein. Die Vorderseite befindet sich dabei vorzugsweise an einer der ersten Lichtquelle abgewandten Seite des Lichtleiters, wohingegen die Rückseite der Lichtquelle zugewandt ist.

Ein zweiter Gegenstand der Erfindung betrifft eine Kraftfahrzeugleuchte mit wenigstens zwei Lichtfunktionen und mit mindestens einer ersten Lichtquelle zur Erfüllung einer ersten, eine Grundfunktion der Kraftfahrzeugleuchte bildenden Lichtfunktion und mit mindestens einer zweiten Lichtquelle zur Erfüllung einer zweiten, eine Zusatzfunktion der Kraftfahrzeugleuchte bildenden Lichtfunktion. Die Kraftfahrzeugleuchte verfügt über mindestens ein zuvor beschriebenes Leuchtmittel.

Eine mit einem zuvor beschriebenen Leuchtmittel mit einem gemeinsamen Lichtleiter für wenigstens zwei unterschiedliche Lichtfunktionen ausgestattete Kraftfahrzeugleuchte weist bei gleichzeitig kompakten Abmessungen ein homogenes Erscheinungsbild sowohl im ein-, als auch im ausgeschalteten Zustand auf.

Eine solche Kraftfahrzeugleuchte kann unter Verwendung von Leuchtdioden bzw. LED-Chips als Leuchtquellen besonders kompakt aufgebaut sein und an fast jede nur erdenkliche Einbausituation angepasst werden.

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente.

Es zeigen in schematischer Darstellung:
- Fig. 1: ein Leuchtmittel zur Erfüllung mehrerer Lichtfunktionen einer Kraftfahrzeugleuchte in einer Seitenansicht.
- Fig. 2: eine Vorderansicht des Leuchtmittels aus Fig. 1, dort von rechts gesehen.
- Fig. 3: einen Schnitt durch das Leuchtmittel aus Fig. 1 in der dort mit A gekennzeichneten Schnittebene.
- Fig. 4: einen Schnitt durch das Leuchtmittel aus Fig. 1 in der dort mit B gekennzeichneten Schnittebene.
- Fig. 5: ein Leuchtmittel zur Erfüllung mehrerer Lichtfunktionen einer Kraftfahrzeugleuchte mit vorgesetzter Optikscheibe.

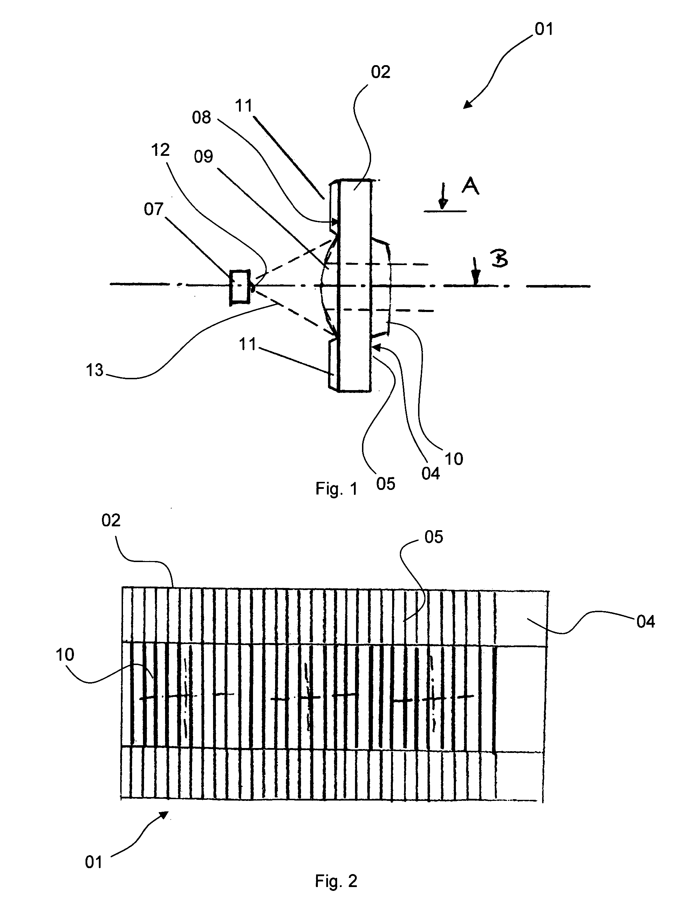

Ein in den Fig. 1 bis 5 ganz oder zum Teil gezeigtes Leuchtmittel 01 zur Erfüllung wenigstens zweier Lichtfunktionen einer Kraftfahrzeugleuchte weist wenigstens einen Lichtleiter 02 auf, der wenigstens eine Lichteinkoppelfläche 03 und zumindest eine von der Lichteinkoppelfläche 03 verschiedene, auf einer Vorderseite 04 des Lichtleiters 02 angeordnete Lichtauskoppelfläche 05 aufweist. Das Leuchtmittel 01 weist darüber hinaus wenigstens eine der wenigstens einen Lichteinkoppelfläche 03 zugeordnete erste Lichtquelle 06 auf. Die wenigstens eine erste Lichtquelle 06 ist zusammen mit dem mindestens einen Lichtleiter 02 zur Erfüllung einer ersten, beispielsweise eine Grundfunktion der Kraftfahrzeugleuchte bildenden Lichtfunktion vorgesehen. Bei der Grundfunktion kann es sich beispielsweise um eine Begrenzungs- oder Rücklichtfunktion handeln.

Das Leuchtmittel 01 umfasst außerdem zumindest eine zweite Lichtquelle 07 zur Erfüllung einer zweiten, beispielsweise eine Zusatzfunktion der Kraftfahrzeugleuchte bildenden Lichtfunktion. Bei der Zusatzfunktion kann es sich beispielsweise um eine Wiederholblinkfunktion, um eine Bremslichtfunktion, um eine Nebelschlusslichtfunktion oder um eine Rückfahrlichtfunktion oder um eine Kombination zweier oder mehrerer der genannten oder auch anderer Lichtfunktionen handeln.

Der mindestens eine Lichtleiter 02 weist eine Rückseite 08 auf. Die Rückseite 08 ist beispielsweise die der Vorderseite 04 abgewandte Seite des Lichtleiters 02 bzw. liegt der Vorderseite 04 gegenüber. Auf der Rückseite 08 des zunächst für die Grundfunktion vorgesehenen Lichtleiters 02 ist wenigstens eine totalreflektierende Sammeloptik 09 angeordnet. Ferner ist auf der Vorderseite 04 wenigstens eine Streuoptik 10 vorgesehen. Mit der Sammeloptik 09 wird Licht der für die zweite Lichtfunktion vorgesehenen zumindest einen zweiten Lichtquelle 07 zunächst in den Lichtleiter 02 auf dessen Rückseite 08 ein- und anschließend mittels der Streuoptik 10 auf dessen Vorderseite 04 wieder ausgekoppelt.

Zur Lichtauskopplung des von der ersten Lichtquelle 06 über die Lichteinkoppelfläche 03 in den Lichtleiter 02 eingekoppelten Lichts können an der der Lichtauskoppelfläche 05 gegenüberliegenden Seite, bei welcher Seite es sich vorzugsweise um die Rückseite 08 des Lichtleiters 02 handelt, und/oder an der die Lichtauskoppelseite 05 umfassenden Vorderseite 04 streuende und/oder reflektierende Auskoppelelemente 11 vorgesehen sein.

In dem Bereich, der mit der totalreflektierenden Sammeloptik 09 und mit der Streuoptik 10 versehen ist, ist die Auskoppeloptik 11 vorzugsweise ausgespart. Die Aussparung betrifft dabei bevorzugt nur eine auf der Rückseite 08 des Lichtleiters 02 angeordnete Auskoppeloptik 11. Ist eine solche Auskoppeloptik 11 auf der Vorderseite 04 vorgesehen, so kann diese vorzugsweise mit der Streuoptik 10 zusammenwirken.

Bei wenigstens einer ersten Lichtquelle 06 und/oder bei wenigstens einer der zweiten Lichtquellen 07 handelt es sich bevorzugt um eine Leuchtdiode 12 oder einen LED-Chip.

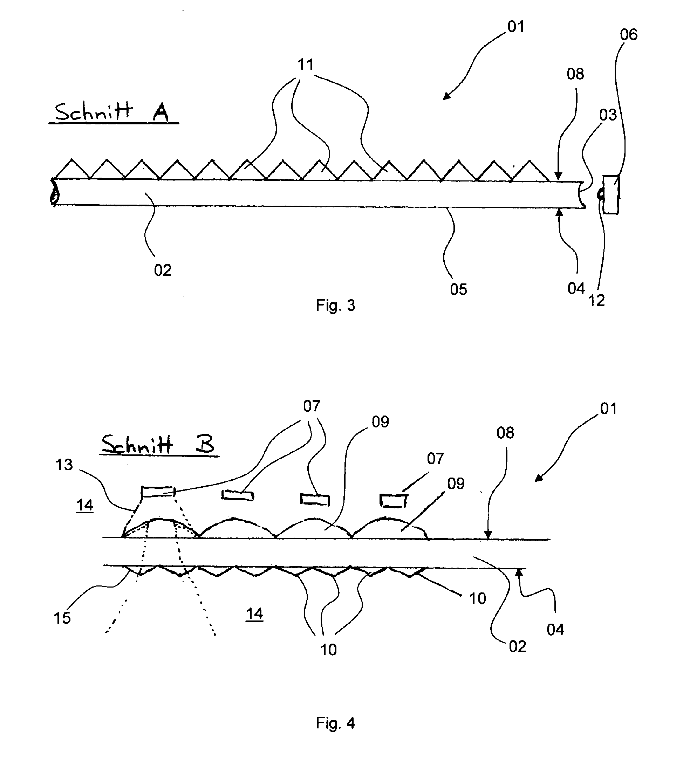

Die totalreflektierende Sammeloptik 09 kennzeichnet sich dadurch aus, dass jeder Lichtstrahl 13 einer Schaar von Lichtstrahlen, von denen in Fig. 4 zwei äußere stellvertretend durch gestrichelte Linien dargestellt sind, zunächst beim Übergang von der optisch dünneren Umgebung 14 in eine auf der Rückseite 08 des Lichtleiters 02 angeordnete Sammeloptik 09 unter einem Winkel gebrochen wird, der auch bei mehrmaliger Reflektion im Werkstoff des Lichtleiters 02 bzw. der Sammeloptik 09 aus diesem nicht mehr austritt, es sei denn er trifft auf eine Grenzfläche 15 zwischen einer Streuoptik 10 auf der Vorderseite 04 des Lichtleiters 02 und der Umgebung 14.

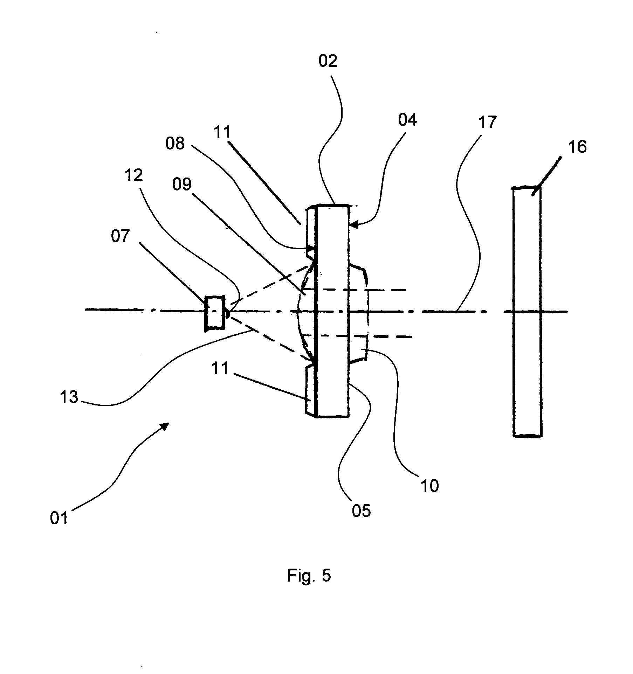

Die Lichtquelle kann wie in den Ausführungsbeispielen in Fig. 1 und 5 dargestellt reflektorfrei ausgeführt sein.

Ebenfalls ist es möglich, mindestens einen Reflektor wenigstens der zumindest einen zweiten Lichtquelle 07 zuzuordnen. Ein solcher Reflektor kann am Lichtleiter 02 anliegend angeordnet sein, oder er kann beispielsweise um einen zur Wärmeabfuhr vorgesehenen Spalt von dem Lichtleiter beabstandet sein. Ein solcher Reflektor verhindert Lichtverluste der zweiten Lichtquelle 07 durch rückwärtige oder seitliche Abstrahlung und dient damit einer Verbesserung des Wirkungsgrads des optischen Systems bestehend aus zweiter Lichtquelle 07, Sammeloptik 09, Lichtleiter 02 und Streuoptik 10, da er das von der zweiten Lichtquelle ausgestrahlte Licht auf die Sammeloptik 09 bündelt und kein Licht ungenutzt entweichen lässt.

Beim Einbau in eine Kraftfahrzeugleuchte kann wie in Fig. 5 dargestellt zur gezielten Erzeugung gewünschter oder erforderlicher optischer Effekte eine Optikscheibe 16 in Hauptabstrahlrichtung 17 vor dem Leuchtmittel 01 zwischen einer ein Gehäuse der Kraftfahrzeugleuchte gegenüber Umwelteinflüssen abschließenden Lichtscheibe und dem Leuchtmittel 01 angeordnet sein.

Die Erfindung ist insbesondere im Bereich der Herstellung von Kraftfahrzeugleuchten sowie von Leuchtmitteln für Kraftfahrzeugleuchten gewerblich anwendbar.

### Bezugszeichenliste

- 01: Leuchtmittel
- 02: Lichtleiter
- 03: Lichteinkoppelfläche
- 04: Vorderseite
- 05: Lichtauskoppelfläche
- 06: erste Lichtquelle
- 07: zweite Lichtquelle
- 08: Rückseite
- 09: totalreflektierende Sammeloptik
- 10: Streuoptik
- 11: Auskoppelelement
- 12: Leuchtdiode
- 13: Lichtstrahl
- 14: Umgebung
- 15: Grenzfläche
- 16: Optikscheibe
- 17: Hauptabstrahlrichtung

## Patentansprüche

1. Leuchtmittel (01) für eine Kraftfahrzeugleuchte mit mindestens einem Lichtleiter (02), der wenigstens eine Lichteinkoppelfläche (03) und zumindest eine von der Lichteinkoppelfläche (03) verschiedene, auf einer Vorderseite (04) des Lichtleiters (02) angeordnete Lichtauskoppelfläche (05) aufweist, und mit wenigstens einer der wenigstens einen Lichteinkoppelfläche (03) zugeordneten ersten Lichtquelle (06), welche wenigstens eine erste Lichtquelle (06) zusammen mit dem mindestens einen Lichtleiter (02) zur Erfüllung einer ersten Lichtfunktion vorgesehen ist,
**gekennzeichnet durch**
zumindest eine zweite Lichtquelle (07) zur Erfüllung einer zweiten Lichtfunktion, wobei der mindestens eine Lichtleiter (02) eine Rückseite (08) aufweist, auf der wenigstens eine totalreflektierende Sammeloptik (09) angeordnet ist, und auf der Vorderseite (04) wenigstens eine Streuoptik (10) vorgesehen ist, mit welchen Optiken (09, 10) Licht der für die zweite Lichtfunktion vorgesehenen zweiten Lichtquelle (07) zunächst in den Lichtleiter (02) auf dessen Rückseite (08) ein-und anschließend auf dessen Vorderseite (04) wieder ausgekoppelt wird.

2. Leuchtmittel nach Anspruch 1,
**dadurch gekennzeichnet,**
**dass** die Rückseite (08) der Vorderseite (04) gegenüberliegt.

3. Leuchtmittel nach Anspruch 1 oder 2,
**gekennzeichnet durch**
wenigstens eine weitere Lichtquelle für zumindest eine zusätzliche Lichtfunktion.

4. Leuchtmittel nach Anspruch 3,
**dadurch gekennzeichnet,**
**dass** für jede wenigstens eine weitere Lichtquelle zur Erfüllung einer zusätzlichen Lichtfunktion eine eigene totalreflektierende Sammeloptik (09) auf der Rückseite (08) des Lichtleiters (02) und eine eigene Streuoptik (10) auf der Vorderseite (04) des Lichtleiters (02) vorgesehen ist.

5. Leuchtmittel nach Anspruch 3,
**dadurch gekennzeichnet,**
**dass** zumindest wenigstens eine weitere Lichtquelle zur Erfüllung einer zusätzlichen Lichtfunktion die zur Erfüllung einer anderen Lichtfunktion vorgesehene totalreflektierende Sammeloptik (09) auf der Rückseite (08) des Lichtleiters (02) und Streuoptik (10) auf der Vorderseite (04) des Lichtleiters (02) mitnutzt.

6. Leuchtmittel nach Anspruch 3,
**dadurch gekennzeichnet,**
**dass** zumindest wenigstens eine weitere Lichtquelle zur Erfüllung einer zusätzlichen Lichtfunktion die zur Erfüllung der ersten Lichtfunktion vorgesehene Lichtein- (03) und -auskoppelfläche (05) mitnutzt.

7. Leuchtmittel nach einem der vorhergehenden Ansprüche,
**gekennzeichnet durch**,
mindestens einen wenigstens dem zumindest einen zweiten Leuchtmittel (07) zugeordneten Reflektor, welcher Reflektor das von dem zweiten Leuchtmittel (07) ausgestrahlte Licht auf die an der Rückseite (08) des Lichtleiters (02) angeordnete Sammeloptik (09) konzentriert.

8. Leuchtmittel nach Anspruch 7,
**dadurch gekennzeichnet,**
**dass** der Reflektor an der Rückseite (08) des Lichtleiters (02) anliegt.

9. Leuchtmittel nach einem der vorhergehenden Ansprüche,
**gekennzeichnet durch**
wenigstens eine Leuchtdiode (12) oder einen LED-Chip als mindestens eine Lichtquelle (06, 07).

10. Kraftfahrzeugleuchte mit wenigstens zwei Lichtfunktionen und mit mindestens einer ersten Lichtquelle (06) zur Erfüllung einer ersten, eine Grundfunktion der Kraftfahrzeugleuchte bildenden Lichtfunktion und mit mindestens einer zweiten Lichtquelle (07) zur Erfüllung einer zweiten, eine Zusatzfunktion der Kraftfahrzeugleuchte bildenden Lichtfunktion,
**gekennzeichnet durch**
wenigstens ein zumindest die erste Lichtquelle (06) und die zweite Lichtquelle (07) umfassendes Leuchtmittel (01) nach einem der vorhergehenden Ansprüche.

## Geänderte Patentansprüche

### Geänderte Patentansprüche gemäss Regel 137(2) EPÜ.

**1.** Leuchtmittel (01) für eine Kraftfahrzeugleuchte mit mindestens einem Lichtleiter (02), der wenigstens eine Lichteinkoppelfläche (03) und zumindest eine von der Lichteinkoppelfläche (03) verschiedene, auf einer Vorderseite (04) des Lichtleiters (02) angeordnete Lichtauskoppelfläche (05) aufweist, und mit wenigstens einer der wenigstens einen Lichteinkoppelfläche (03) zugeordneten ersten Lichtquelle (06), welche wenigstens eine erste Lichtquelle (06) zusammen mit dem mindestens einen Lichtleiter (02) zur Erfüllung einer ersten Lichtfunktion vorgesehen ist, und zumindest einer zweiten Lichtquelle (07) zur Erfüllung einer zweiten Lichtfunktion, wobei der mindestens eine Lichtleiter (02) eine Rückseite (08) aufweist, auf der wenigstens eine totalreflektierende Sammeloptik (09) angeordnet ist, und auf der Vorderseite (04) wenigstens eine Streuoptik (10) vorgesehen ist, mit welchen Optiken (09,10) Licht der für die zweite Lichtfunktion vorgesehenen zweiten Lichtquelle (07) zunächst in den Lichtleiter (02) auf dessen Rückseite (08) ein- und anschließend auf dessen Vorderseite (04) wieder ausgekoppelt wird,
**dadurch gekennzeichnet,**
**dass** mehr als zwei Lichtfunktionen vorgesehen sind, welche durch kombiniertes Einschalten mehrerer Lichtquellen (06, 07) erfüllt werden, so dass mehr Lichtfunktionen erfüllt werden können, als eigenständige Lichtquellen (06, 07) vorgesehen sind.

**2.** Leuchtmittel nach Anspruch 1,
**dadurch gekennzeichnet,**
**dass** die Rückseite (08) der Vorderseite (04) gegenüberliegt.

**3.** Leuchtmittel nach Anspruch 1 oder 2,
**gekennzeichnet durch**
wenigstens eine weitere Lichtquelle für zumindest eine zusätzliche Lichtfunktion.

**4.** Leuchtmittel nach Anspruch 3,
**dadurch gekennzeichnet,**
**dass** für jede wenigstens eine weitere Lichtquelle zur Erfüllung einer zusätzlichen Lichtfunktion eine eigene totalreflektierende Sammeloptik (09) auf der Rückseite (08) des Lichtleiters (02) und eine eigene Streuoptik (10) auf der Vorderseite (04) des Lichtleiters (02) vorgesehen ist.

**5.** Leuchtmittel nach Anspruch 3,
**dadurch gekennzeichnet,**
**dass** zumindest wenigstens eine weitere Lichtquelle zur Erfüllung einer zusätzlichen Lichtfunktion die zur Erfüllung einer anderen Lichtfunktion vorgesehene totalreflektierende Sammeloptik (09) auf der Rückseite (08) des Lichtleiters (02) und Streuoptik (10) auf der Vorderseite (04) des Lichtleiters (02) mitnutzt.

**6.** Leuchtmittel nach Anspruch 3,
**dadurch gekennzeichnet,**
**dass** zumindest wenigstens eine weitere Lichtquelle zur Erfüllung einer zusätzlichen Lichtfunktion die zur Erfüllung der ersten Lichtfunktion vorgesehene Lichtein- (03) und -auskoppelfläche (05) mitnutzt.

**7.** Leuchtmittel nach einem der vorhergehenden Ansprüche,
**gekennzeichnet durch**,
mindestens einen wenigstens dem zumindest einen zweiten Leuchtmittel (07) zugeordneten Reflektor, welcher Reflektor das von dem zweiten Leuchtmittel (07) ausgestrahlte Licht auf die an der Rückseite (08) des Lichtleiters (02) angeordnete Sammeloptik (09) konzentriert.

**8.** Leuchtmittel nach Anspruch 7,
**dadurch gekennzeichnet,**
**dass** der Reflektor an der Rückseite (08) des Lichtleiters (02) anliegt.

**9.** Leuchtmittel nach einem der vorhergehenden Ansprüche,
**gekennzeichnet durch**
wenigstens eine Leuchtdiode (12) oder einen LED-Chip als mindestens eine Lichtquelle (06, 07).

**10.** Kraftfahrzeugleuchte mit wenigstens zwei Lichtfunktionen und mit mindestens einer ersten Lichtquelle (06) zur Erfüllung einer ersten, eine Grundfunktion der Kraftfahrzeugleuchte bildenden Lichtfunktion und mit mindestens einer zweiten Lichtquelle (07) zur Erfüllung einer zweiten, eine Zusatzfunktion der Kraftfahrzeugleuchte bildenden Lichtfunktion,
**gekennzeichnet durch**
wenigstens ein zumindest die erste Lichtquelle (06) und die zweite Lichtquelle (07) umfassendes Leuchtmittel (01) nach einem der vorhergehenden Ansprüche.
